# EUROPÄISCHE PATENTSCHRIFT

(11) **EP 1 693 319 B1**
(45) Veröffentlichungstag und Bekanntmachung des Hinweises auf die Patenterteilung: **05.10.2011**
(21) Anmeldenummer: 06113965.5
(22) Anmeldetag: 22.03.2004
(51) Int. Cl.: B65G 1/137, B65G 57/03

(54) **Ladungsträger-Beladevorrichtung**
Loading device for load carriers
Dispositif de chargement pour porte-charges

(30) Priorität: 26.03.2003 DE 10313576
(43) Veröffentlichungstag der Anmeldung: 23.08.2006
(62) Teilanmeldung aus: 04006841.3
(73) Patentinhaber: WITRON Logistik + Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 0 425 221
- EP-A- 0 615 925
- EP-A- 0 636 557
- DE-A1- 3 814 101
- DE-A1- 4 213 351
- GB-A- 2 132 155
- US-A- 4 546 593
- US-A- 5 733 098

## Beschreibung

### Gebiet der Erfindung

Die Erfindung betrifft eine Vorrichtung und ein Verfahren zum Beladen eines Ladungsträgers wie etwa einer Palette mit Packeinheiten, die einen Ladestapel auf dem Ladungsträger bilden.

### Technologischer Hintergrund

Bei der Entwicklung von Logistiksystemen geht die Entwicklung hin zu immer stärkerer Automatisierung, um Kosten und Zeit zu sparen und die Wirtschaftlichkeit der Systeme zu erhöhen. Die Einlagerung in ein Hochregallager sowie die Auslagerung aus diesem erfolgt dabei häufig mit automatisierten und rechnergesteuerten Regalfahrzeugen. Im Ausgabebereich eines Lagersystems werden die für einen Auftrag benötigten Artikel auf ein Transportmittel wie etwa einen LKW verladen. Für viele Anwendungen wie z.B. im Einzelhandel umfaßt ein Lieferauftrag eine Vielzahl von unterschiedlichen Artikeln, die mittels Ladungsträgern wie etwa mit Rollen versehenen Paletten auf LKW geladen und auf diesen in die einzelnen Filialen geliefert werden.

Die Beladung der Ladungsträger bzw. Paletten mit den Artikeln, die in der Regel als Packeinheiten oder Collis (beispielsweise Kartons oder eingeschweißte Artikelpackungen) vorliegen, erfolgt bisher in den allermeisten Fällen manuell. Der Aufbau eines solchen Ladestapels auf einer Palette erfordert viel Geschick, um einerseits einen stabilen Ladestapel zu bilden, der zum Transport beispielsweise mit einer Stabilisierungsfolie umwickelt wird, und andererseits eine möglichst gute Volumenausnutzung und zum Transport im LKW ein möglichst hohen Ladestapel zu bilden. Die manuelle Palettenbeladung ist daher zeitaufwendig, erfordert geschickte und geübte Mitarbeiter und stellt einen begrenzenden Faktor für die Wirtschaftlichkeit des Logistiksystems dar. Das manuelle Beladen von Ladungsträgern mit zum Teil schweren Packeinheiten unter ergonomisch ungünstigen Bedingungen stellt außerdem eine gesundheitliche Belastung der mit der Beladung betrauten Mitarbeiter dar.

Es ist daher bekannt, Paletten mittels Greifersystem zu beladen. Dabei werden die zu handhabenden Packeinheiten (Collis) wie etwa Kartons und dergleichen durch Greifarme des Roboters seitlich oder über Vakuumsaugnäpfe von oben her ergriffen und dann gemäß vorher bestimmten Regeln auf die Palette geladen. Nachteilig dabei ist jedoch, daß Vakuumgreifer nur bei glatten und stabilen Materialien anwendbar sind und seitliche Greifarme leicht abrutschen oder bei empfindlichen Verpackungen Beschädigungen hervorrufen können. Außerdem verbleiben bei Einsatz von seitlich angreifenden Greifarmen notwendigerweise Abstände zwischen den Packstücken im Ladestapel auf dem Ladungsträger, so daß eine optimale Volumenausnutzung und Stabilität aufgrund der erbleibenden Lücken zwischen den Packeinheiten nicht möglich ist.

Die DE 3814101 A1 beschreibt ein Verfahren zum Zusammenstellen einer Transportpalette aus verschiedenen Warenverpackungen, wobei zum Bilden wenigstens einer Warenverpackungsschicht folgende Verfahrensschritte ausgeführt werden: Auswählen der auf wenigstens eine eigene Warenbahn aufzuschichtender Warenverpackungen, wählen der auf wenigstens eine eigene Warenbahn zu stapelnden Warenverpackungen, Ausführen des Aufschichtens der aufzuschichtenden Warenverpackungen wenigstens bis zu einer im wesentlichen der Größe der Transportpalette entsprechenden Schicht, Ausführen des Stapelns der zu stapelnden Warenverpackungen wenigstens bis zu einem Stapel und Zusammensetzen der Warenverpackungsschicht und des Warenverpackungsstapels, um eine verschiedene Warenverpackungen bildende Transportpalette zu bilden.

### Gegenstand der Erfindung

Es ist daher eine Aufgabe der vorliegenden Erfindung, eine Vorrichtung und ein Verfahren zum Beladen von Ladungsträgern zu schaffen, das die genannten Nachteile im Stand der Technik vermeidet und eine automatische Beladung von Ladungsträgern mit Packstücken verschiedenster Größe und Beschaffenheit ermöglicht.

Gelöst wird die Aufgabe durch eine Vorrichtung zum Beladen eines Ladungsträgers mit einen Ladestapel bildenden Packeinheiten aufweisend Handhabungs- und Unterstützungsmittel, welche eine zu verladende Packeinheit während des gesamten Beladevorgangs von einer Zuführeinrichtung auf den Ladestapel von unten her unterstützen und ausgebildet sind, die Packeinheit an einer beliebigen wählbaren räumlichen Position auf dem Ladestapel abzulegen. Von der Zuführeinrichtung, beispielsweise einem Förderband, werden die Packeinheiten mit Hubstiften von den Tablaren angehoben, welche Tablare Öffnungen zum Eingriff der Hubstifte aufweisen.

Die erfindungsgemäße Vorrichtung ermöglicht es, die Packeinheiten vollautomatisch auf einen Ladungsträger wie etwa eine Palette zu laden und einen stabilen und bezüglich der Volumenausnützung optimierten Ladestapel zu bilden. Die Packeinheiten liegen dabei während des gesamten Beladevorgangs auf einer Unterstützungsfläche auf, so daß Greifer oder dergleichen nicht erforderlich sind. Es können somit Packeinheiten verschiedener Formen und Materialbeschaffenheiten sicher und zuverlässig verladen werden.

Ferner schlägt die Erfindung ein Verfahren zum automatisierten Beladen eines Ladungsträgers mit einen Ladestapel bildenden Packeinheiten vor, welches Verfahren die Schritte Bestimmung einer dreidimensionalen Beladungskonfiguration der Packeinheiten in dem Ladestapel, Ermittlung einer diese Beladungskonfiguration ermöglichenden Beladungssequenz und die aufeinanderfolgende automatisierte Beförderung der Packeinheiten auf den Ladungsträger in einer Beladungsreihenfolge entsprechend der ermittelten Beladungssequenz an die durch die Beladungskonfiguration bestimmte Position im Ladestapel umfaßt.

Bei dem erfindungsgemäßen Verfahren wird eine bezüglich der Stabilität und/oder Volumenausnutzung optimierte räumliche (dreidimensionale) Beladungskonfiguration der Packeinheiten im Ladestapel bestimmt und aus dieser eine vorteilhafte Beladungsreihenfolge ermittelt. Entsprechend dieser Reihenfolge und der ermittelten Konfiguration werden die Packeinheiten dann automatisch ohne manuelle Hilfe auf den Ladungsträger geladen. Das Verfahren ermöglicht eine Bildung von optimierten Ladungsstapeln sowie eine Reduzierung der Kosten bei gleichzeitiger Steigerung der Verladeleistung.

Vorzugsweise weist die Beladevorrichtung eine Hubeinrichtung zum Anheben und Absenken des Ladungsträgers auf, so daß der Ladungsträger bei anwachsendem Ladestapel während des Beladevorgangs kontinuierlich abgesenkt werden kann.

Vorzugsweise ist zum Laden des Ladungsträgers eine Ladehilfe vorgesehen, die wenigstens eine, vorzugsweise drei Seiten des Ladestapels umschließt und so eine Abstützfläche bei der Beladung der Packeinheiten bietet.

Um bei Entfernung der Ladehilfe einen stabilen Ladestapel zu bilden, wird vorzugsweise gleichzeitig mit dem Absenken der Ladehilfe gegenüber dem Ladungsträger der Ladestapel mit einer Stabilisierungsfolie umwickelt.

Zur Beladung von seitlich umschlossenen Ladungsträgern wie Kisten, Behältern oder Gitterboxen kann eine Ladungsträger-Kippeinrichtung vorgesehen sein, mit der der umschlossene Ladungsträger beispielsweise um 90 Grad nach vorne gekippt wird, so daß er mit der erfindungsgemäßen Beladevorrichtung "von oben" beladen werden kann. Entsprechend ist dann vor der Beladevorrichtung vorzugsweise eine Packeinheit-Kippeinrichtung vorgesehen, um die Packeinheiten entsprechend der bestimmten Beladungskonfiguration um 90 Grad zu kippen.

Die Handhabungs- und Unterstützungsmittel der Beladevorrichtung weisen vorzugsweise eine ortsfeste Ladeplatte und eine Verschiebeeinrichtung zum Verschieben der Packeinheiten auf der Ladeplatte in Richtung der Breitseite des Ladungsträgers auf, die als x-Richtung definiert wird.

Von der Ladeplatte wird die Packeinheit vorzugsweise mittels einer Beladezunge auf die vorher bestimmte Position auf dem Ladestapel befördert. Die Beladezunge ist dabei sowohl in x-Richtung als auch in Richtung der Ladetiefe des Ladungsträgers (z-Richtung) bewegbar. Um eine Packeinheit von der Beladezunge auf dem Ladestapel abzulegen, ist vorzugsweise ein Abstreifer vorgesehen, der unabhängig von der Beladezunge in z-Richtung und zusammen mit der Beladezunge in x-Richtung verschiebbar ist.

Zur Kontrolle des Beladungsvorgangs ist vorzugsweise eine verfahrbare Abtasteinrichtung, beispielsweise mittels Laser, zur Erfassung der momentanen Höhe des Ladestapels vorgesehen.

Wenn ein Ladungsträger gefüllt ist, wird dieser vorzugsweise mittels einer Ladungsträger-Wechseleinrichtung durch einen neuen unbeladenen Ladungsträger ausgetauscht.

Um eine Packeinheit in definierter Position der Verlademaschine zuzuführen, ist vorzugsweise eine Drehvorrichtung zum Drehen der Tablare, auf denen jeweils eine Packeinheit aufliegt, sowie eine Tablar-Rütteleinrichtung zur definierten Positionierung einer Packeinheit auf dem Tablar vorgesehen.

Die bei dem erfindungsgemäßen Verfahren zum automatisierten Beladen eines Ladungsträgers bestimmte dreidimensionale Ladungskonfiguration kann bezüglich der Ladestabilität des Ladestapels, der dreidimensionalen Volumenausnutzung und/oder der größtmöglichen Höhe des Ladestapels optimiert sein. Dazu kann die dreidimensionale Ladekonfiguration in einzelne Ladeebenen mit möglichst gleich hohen Packeinheiten aufgeteilt sein, wobei die Beladungssequenz oder Beladungsreihenfolge vorzugsweise so bestimmt wird, daß die Packeinheiten einer Ebene stets von hinten nach vorne und von links nach rechts oder von rechts nach links aufgefüllt werden.

### Kurze Beschreibung der Zeichnungen

Die Erfindung wird im folgenden anhand von konkreten Ausführungsbeispielen unter Bezugnahme auf die beiliegenden Zeichnungen beschrieben.
- Fig. 1: ist eine schematische Aufsicht auf ein Lagersystem, für welches die Erfindung anwendbar ist.
- Fig. 2: ist eine Querschnittsansicht entlang der Linie II-II von Fig. 1.
- Fig. 3: zeigt schematisch wesentliche Verfahrensschritte zum Betrieb eines automatisierten Lagers.
- Fig.4: zeigt schematisch in perspektivischer Ansicht ein Tablar mit Packeinheiten, welche bei der Erfindung anwendbar sind.
- Fig. 5: zeigt schematisch die Stationen, welche eine Packeinheit aus dem Tablarlager zur Beladung auf den LKW durchläuft.
- Fig. 6: zeigt schematisch in einem Flußdiagramm die Verfahrensschritte eines Ausführungsbeispiels des erfindungsgemäßen Verfahrens zum automatisierten Beladen eines Ladungsträgers.
- Fig.7: zeigt schematisch in Form eines Flußdiagramms ein Kommissionierverfahren auf welches die vorliegende Erfindung anwendbar ist.
- Fig. 8: zeigt schematisch ein Tablarlager, ein Ausführungsbeispiel der erfindungsgemäßen Beladevorrichtung sowie die zugehörige Fördertechnik.
- Fig. 9: zeigt schematisch die Funktionsweise eines Ausführungsbeispiels einer erfindungsgemäßen Tablar-Rütteleinrichtung.
- Fig. 10: ist eine schematische Perspektivansicht eines Ausführungsbeispiels der erfindungsgemäßen Beladevorrichtung.
- Fig. 11: ist ein schematisches Sequenzdiagramm, welches den Beladevorgang gemäß einem Ausführungsbeispiel der Erfindung zeigt.
- Fig. 12: ist eine Sequenz von schematischen Seitenansichten eines Ausführungsbeispiels der erfindungsgemäßen Beladevorrichtung zur Erläuterung des Funktionsweise der Erfindung.
- Fig. 13: zeigt eine Folienwickelvorrichtung gemäß einem Ausführungsbeispiel der vorliegenden Erfindung.

### Detaillierte Beschreibung von Ausführungsbeispielen

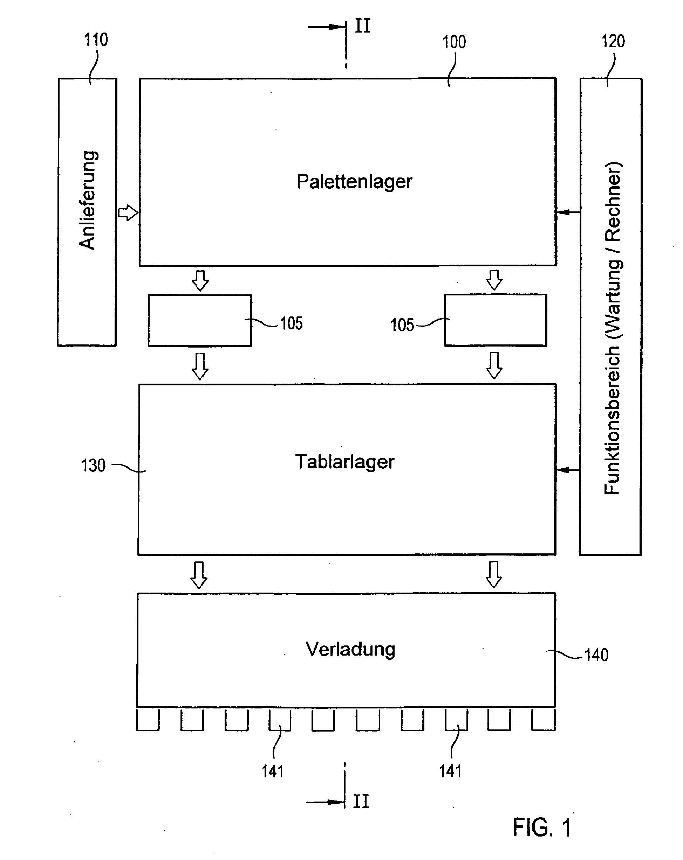

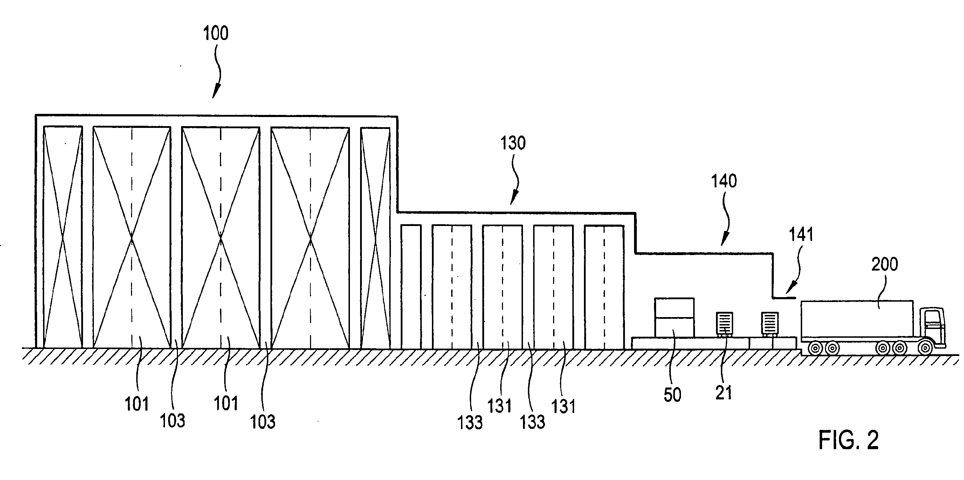

Fig. 1 zeigt in Aufsicht ein Ausführungsbeispiel eines Regallagers, auf welches die Erfindung anwendbar ist und Fig. 2 eine Querschnittsansicht entlang der Linie II-II aus Fig. 1 des Regallagers.

Das Regallager 100 ist als Palettenlager ausgebildet, d.h. die an einer Anlieferungsstation 110 angelieferten Artikel oder Waren werden auf den Anlieferungspaletten in dem Palettenlager oder Eingangslager 100 in Regalreihen gelagert. In den zwischen den Regalreihen 101 ausgebildeten Regalgassen 103 (siehe Fig. 2) sind auf an sich bekannte Art und Weise Regalfahrzeuge verfahrbar, die die angelieferten Lagerpaletten im Regallager einlagern. Mit dem Regallager über eine automatisierte Fördertechnik verbunden ist ein Tablarlager 130, das wiederum durch Regalgassen 133 getrennte Lagerregale 131 umfaßt, in denen die zu lagernden Artikel auf Tablaren oder Trays gelagert werden. Gemäß dem in Fig. 2 gezeigten Ausführungsbeispiel hat das Tablarlager 130 eine geringere Bauhöhe als das Palettenlager 100.

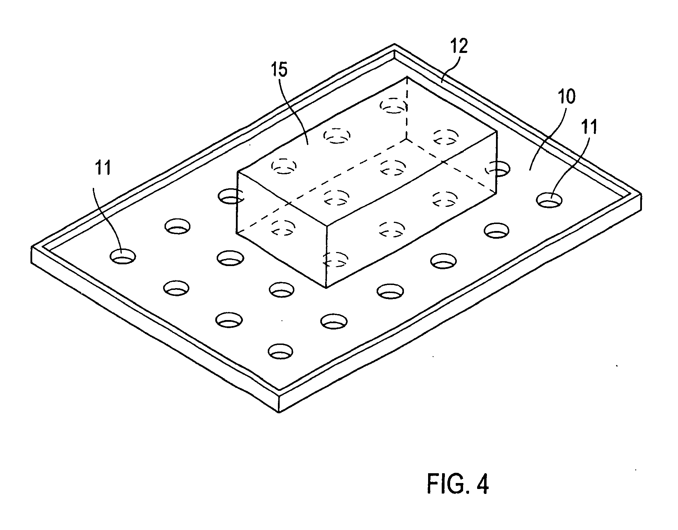

Fig. 4 zeigt schematisch ein Ausführungsbeispiel der in dem Tablarlager 130 verwendeten Tablare 10. Die Tablare sind im allgemeinen flach und tablettförmig ausgebildet und haben vorzugsweise einen umlaufenden Rand 12. Die Tablare können verschiedene Abmessungen je nach den zu lagernden Artikeln 15 haben. Vorzugsweise weisen die Tablare 10 in ihrem Boden Löcher oder Öffnungen 11 auf, die - wie später im einzelnen erläutert wird - den Durchgriff einer Hubeinrichtung zum Anheben eines auf dem Tablar gelagerten Artikels erlaubt.

Vorzugsweise befindet sich auf jedem Tablar 10 genau ein Artikel 15, beispielsweise eine Packeinheit (Colli) zur Verladung auf eine Auftragspalette eines LKW 200.

Wie in Fig. 1 schematisch gestellt, ist zwischen Palettenlager 100 und Tablarlager 130 eine Depalettiereinrichtung 105 vorgesehen, mit der auf an sich bekannte Art und Weise die Eingangspalettenstapel automatisch mit Greif- und Saugmitteln in die den Palettenstapel bildendenden Packeinheiten vereinzelt. An das Palettenlager und das Tablarlager schließt sich ein Funktionsbereich 120 an, der Wartung und Reparatur dient sowie beispielsweise einen Lagerverwaltungsrechner enthalten kann. An das Tablarlager 130 schließt sich eine Verladungszone 140 an, die eine oder mehrere erfindungsgemäße Beladevorrichtungen 50 für Ladungsträger aufweist, auf denen Ladungsträger wie beispielsweise Auftragspaletten mit den für einen Kommissionierauftrag benötigten Packeinheiten 15 beladen werden. Die Ladungsträger mit fertiggestelltem Ladestapel 21 werden über eine LKW-Rampe 141 (siehe Fig. 2) ebenengleich in den LKW 200 geladen.

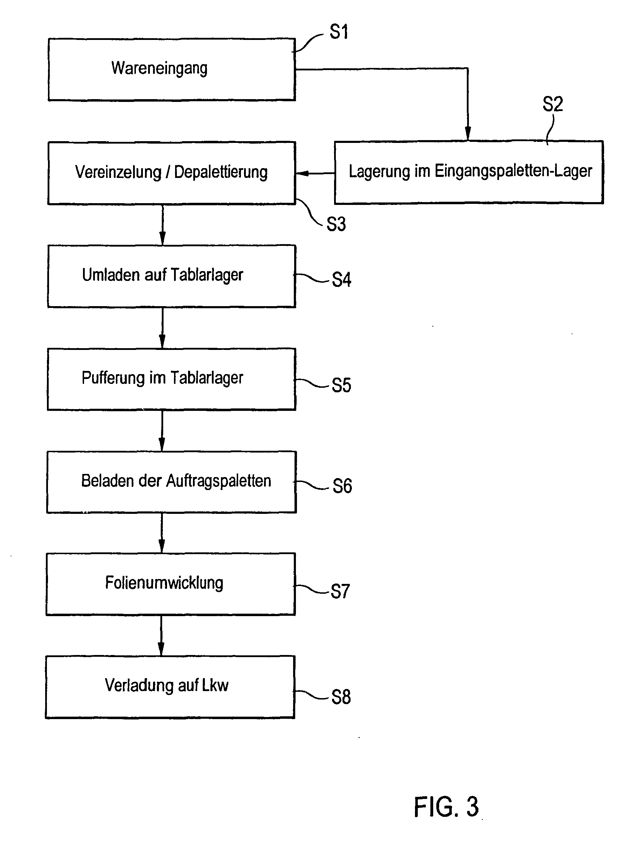

Die wichtigsten in dem Lager ablaufenden Vorgänge sind schematisch in dem Flußdiagramm von Fig. 3 dargestellt. In einem ersten Schritt S1 werden die Waren an der Anlieferungsstation 110, beispielsweise mit LKW, angeliefert und dann mit der vorzugsweise automatisierten Fördertechnik im Palettenlager 100 eingelagert (Schritt S2).

Das sich an das Palettenlager anschließende Tablarlager 130 dient als Puffer, so daß immer dann, wenn Artikel im Tablarlager 130 knapp werden, beispielsweise ein Vorrat von nur noch 24 Stunden oder 48 Stunden vorhanden ist, die Artikel aus dem Palettenlager 100 angefordert, aus den Paletten entnommen und in einem Schritt S3 vereinzelt und anschließend einzeln auf die Tablare 10 geladen werden (Schritt S4). Mit einer geeigneten (nicht dargestellten) Fördertechnik werden die Artikel auf den in der Größe angepaßten Tablaren in Tablarlager 130 zwischengelagert oder gepuffert. Vorzugsweise werden kleinere Artikel auf kleinen Tablaren vierfach tief oder große Artikel auf größeren Tablaren zweifach tief in Tablar-Regalen gelagert.

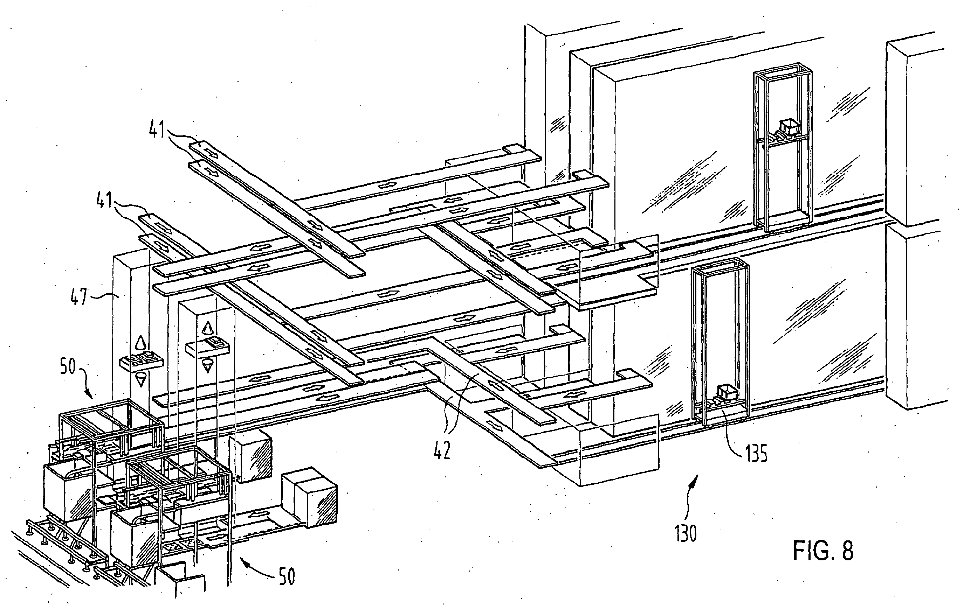

Sobald ein oder mehrere Kommissionieraufträge, d.h. Aufträge zur Zusammenstellung und Verladung einer Warenlieferung, beispielsweise für eine Einzelhandelsfiliale, erfaßt werden, werden die für den Kommissionierauftrag benötigten Artikel bzw. Packeinheiten über die automatisierte Fördertechnik (Regalfahrzeug 135, Auslagerbahnen 42, siehe Fig. 8) dem Tablarlager entnommen und in einer bestimmten Reihenfolge (wird später im Detail erläutert) der Verladungszone 140 zugeführt. Dort werden die Packeinheiten auf Auftragspaletten geladen (Schritt S6), die Ladestapel mit Sicherungsmitteln wie einer Folie, Bändern oder dgl. umwickelt (Schritt S7) und schließlich auf LKW verladen (Schritt S8).

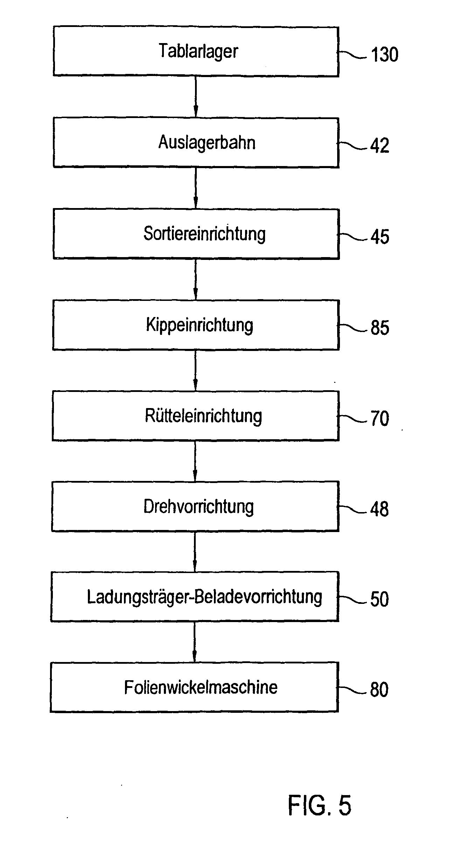

Die von den einzelnen Packeinheiten vom Tablarlager bis zur Verladung auf den LKW durchlaufenen Stationen sind im einzelnen schematisch in Fig. 5 dargestellt. Aus dem Tablarlager 130 werden die Packeinheiten mit geeigneten Regalfahrzeugen 135 entnommen (siehe Fig. 8) und an Auslagerbahnen 42, die als Endlosfördereinrichtungen ausgebildet sind, übergeben. Die Auslagerbahnen weisen vorzugsweise eine oder mehrere Sortiereinrichtungen 45auf, die als Überholeinrichtungen mit einer mit zwei Weichen versehenen Parallelspur oder Ausweichspur der Auslagerbahn 42 ausgebildet sein können und einen Überholvorgang oder eine Änderung der Auslagersequenz zweier oder mehrerer dem Tablarlager entnommener Tablare ermöglichen.

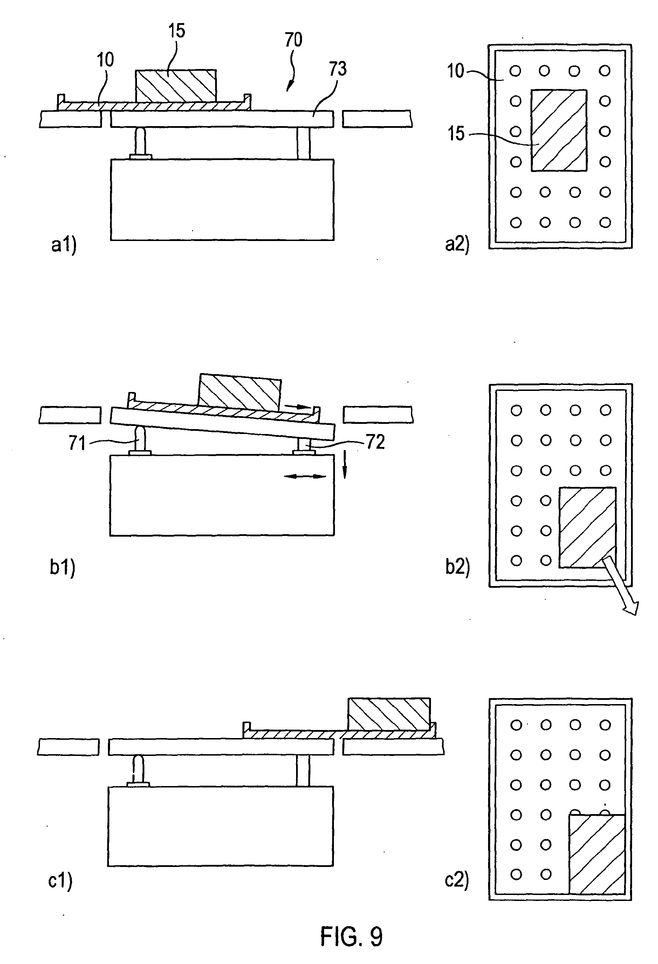

Anschließend kann eine Packeinheit-Kippeinrichtung 85 vorgesehen sein, um eine Packeinheit auf dem Tablar um 90 Grad zu kippen. Dazu können Hubstifte zum Anheben der Packeinheit und/oder geeignete Greifer benutzt werden. Daraufhin gelangt ein Tablar auf eine Tablar-Rütteleinrichtung 70, deren Funktionsweise unter Bezugnahme auf Fig. 9 später im Detail erläutert wird, wo die Packeinheit 15 bezüglich des Tablars 10 definiert, beispielsweise in einer Ecke des Tablars, positioniert werden kann. Daraufhin gelangt das Tablar mit Packeinheit zu einer Drehvorrichtung 48, auf der sich das Tablar um 90°, 180° oder 270° drehen läßt, um eine definierte Position bezüglich der anschließend folgenden Ladungsträger-Beladevorrichtung 50 einzunehmen. Dort werden die Packeinheiten auf einen Ladungsträger bzw. eine Auftragspalette 20 geladen und bilden einen Ladestapel 21, der mittels einer Folienwickelmaschine 80 zur Stabilisierung mit Folie umwickelt wird. Der so fertiggestellte Ladungsstapel auf der Palette kann dann auf einen LKW verladen und zum Lieferort, beispielsweise einer Einzelhandelsfiliale, transportiert werden.

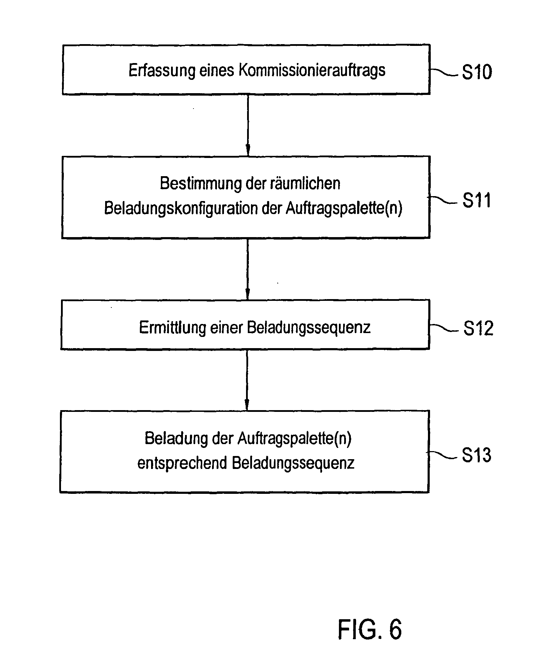

Das Diagramm von Fig. 6 zeigt schematisch die Verfahrensschritte eines Ausführungsbeispiels des erfindungsgemäßen Verfahrens zum automatischen Beladen eines Ladungsträgers mit einem Ladestapel bildenden Packeinheiten. Im ersten Schritt S10 wird durch den (nicht dargestellten) Lagerverwaltungsrechner ein Kommissionierauftrag erfaßt, der eine oder mehrere Ladungsträger (Paletten) 20 umfassen kann. Aufgrund der durch Identifizierungscodes identifizierten Artikel und deren gespeicherte Packungsgrößen wird in einem Verfahrensschritt S11 eine räumliche Beladungskonfiguration eines oder mehrerer Ladungsstapel auf der/den Auftragspaletten ermittelt. Dabei müssen verschiedenste Aspekte berücksichtigt werden. Einmal muß der fertiggestellte Ladestapel möglichst stabil und einfach transportfähig sein, d.h. schwere Artikel werden vorzugsweise im unteren Teil des Ladestapels und leichtere Artikel eher im oberen Teil des Ladestapels gelagert. Ebenso sind empfindlichere Artikel oder Packeinheiten im oberen Teil des Ladestapels besser untergebracht. Darüber hinaus sollte das Ladevolumen im Liefer-LKW möglichst gut genutzt werden, d.h. der Ladestapel möglichst dicht gepackt und möglichst hoch sein. Außerdem muß die Beladungskonfiguration so ausgebildet sein, daß es mit der automatischen Belademaschine möglich ist, den Ladestapel mit einer festgelegten Beladungssequenz, die im anschließenden Schritt S12 ermittelt wird, zu beladen. Im darauffolgenden Verfahrensschritt S13 wird die wenigstens eine Auftragspalette entsprechend der Beladungssequenz mit den Packeinheiten 15 gemäß der vorher bestimmten räumlichen Beladungskonfiguration beladen.

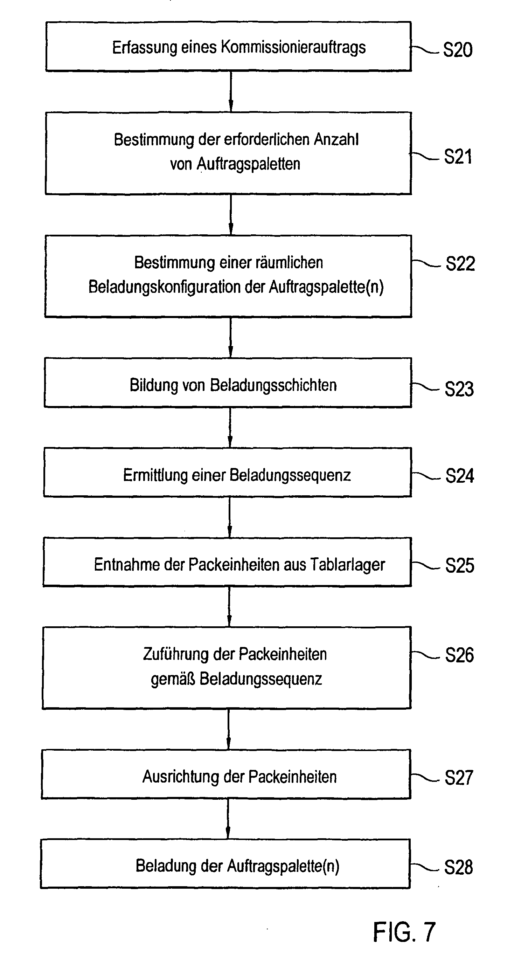

Ein weiteres Ausführungsbeispiel des erfindungsgemäßen Beladeverfahrens wird unter Bezugnahme auf das Flußdiagramm von Fig. 7 nun im Detail beschrieben.

Im Verfahrensschritt S20 werden die einen Kommissionierauftrag bildenden Packeinheiten 15 erfaßt und in dem anschließenden Verfahrensschritt S21 wird die erforderliche Anzahl von Auftragspaletten aufgrund des gespeicherten Volumens und/oder des gespeicherten Gewichts der erfaßten Packeinheiten bestimmt. Dann wird, wie oben unter Bezugnahme auf Fig. 6 erläutert, eine räumliche Beladungskonfiguration des Ladestapels auf der Auftragspalette bzw. dem Ladungsträger 20 ermittelt, wobei verschiedene Randbedingungen wie die Stabilität des Ladestapels oder eine möglichst gute Volumenausnutzung zu berücksichtigen sind. Dabei ist es vorteilhaft, einzelne Beladungsschichten zu bilden (Schritt S23), die einzelne Packeinheiten jeweils ähnlicher Größe oder zumindest ähnlicher Höhe umfassen.

Basierend auf den Beladungsschichten wird im darauffolgenden Verfahrensschritt S24 eine Beladungssequenz oder Beladungsreihenfolge ermittelt, mit der der in Schritt S22 abgeleitete Ladestapel 21 von unten nach oben aufgebaut wird. Dabei wird auf einer Auftragspalette jede Beladungsschicht von hinten nach vorne und von links nach rechts oder von rechts nach links aufgebaut.

Nachdem die Beladungskonfiguration und Beladungssequenz des Ladestapels mittels Lagerverwaltungsrechners bestimmt wurden, werden die Packeinheiten aus dem Pufferlager bzw. Tablarlager auf Tablaren liegend entnommen und der Belademaschine 50 zugeführt. Dabei könnten die einzelnen Packeinheiten schon in der richtigen Reihenfolge (Beladungssequenz) aus dem Tablarlager entnommen werden oder mittels einer oder mehrerer Sortiereinrichtungen 45 in die richtige Reihenfolge gebracht werden (Schritt S26). Mittels einer Packeinheit-Kippeinrichtung 85 können die Packeinheiten durch geeignete Mittel wie etwa Stifte oder Greifer um 90 Grad, 180 Grad usw. gedreht und in der gedrehten Position wieder auf dem Tablar abgelegt werden. Anschließend werden Packeinheiten mittels einer Drehvorrichtung 48 und einer Tablar-Rütteleinrichtung 70 auf dem Tablar liegend ausgerichtet und gegebenenfalls über einen Aufzug 47 (siehe Fig. 8) der Beladevorrichtung 50 zugeführt, wo sie gemäß der Beladungssequenz an dem durch die räumliche (dreidimensionale) Beladungskonfiguration bestimmten Ort des Ladestapels auf dem Ladungsträger 20 angeordnet werden.

Die Tablar-Rütteleinrichtung, die dazu dient, einen Gegenstand oder eine Packeinheit 15 auf dem Tablar 10 auszurichten, wird im folgenden unter Bezugnahme auf Fig. 9 erläutert. Die Tablar-Rütteleinrichtung 70 umfaßt eine Kippauflage 71 sowie einen Hubkolben 72, der eine Auflageplatte 73 an der der Kippauflage 71 diagonal gegenüberliegenden Ecke unterstützt und durch eine Abwärtsbewegung des Hubkolbens eine diagonale Verkippung der Auflageplatte 73 und damit eines aufliegenden Tablars 10 hervorruft.

Der Vorgang der Ausrichtung der Packeinheit 15 auf dem Tablar 10 ist in Fig. 9 in der Bildsequenz a1) bis c1) in Seitenansicht und in der Bildsequenz a2) bis c2) in Aufsicht schematisch dargestellt. In Fig. 9a gelangt Tablar 10 mit aufliegender Packeinheit 15 von der Fördereinrichtung auf die Auflageplatte 73 der Tablar-Rütteleinrichtung 70. In Fig. 9b senkt sich der Hubkolben 72 unter gleichzeitigen horizontalen Rüttelbewegungen (um Reibungskräfte zu überwinden) nach unten, wodurch sich die Packeinheit 15 zur abgesenkten Ecke des Tablars 10 bewegt (siehe Pfeil in Fig. 9b2), wodurch die Packeinheit 15 auf dem Tablar ausgerichtet wird. Anschließend wird der Hubkolben wieder angehoben, so daß sich die Auflageplatte in Horizontalposition befindet und das Tablar 10 mit ausgerichteter Packeinheit 15 weiter befördert werden kann.

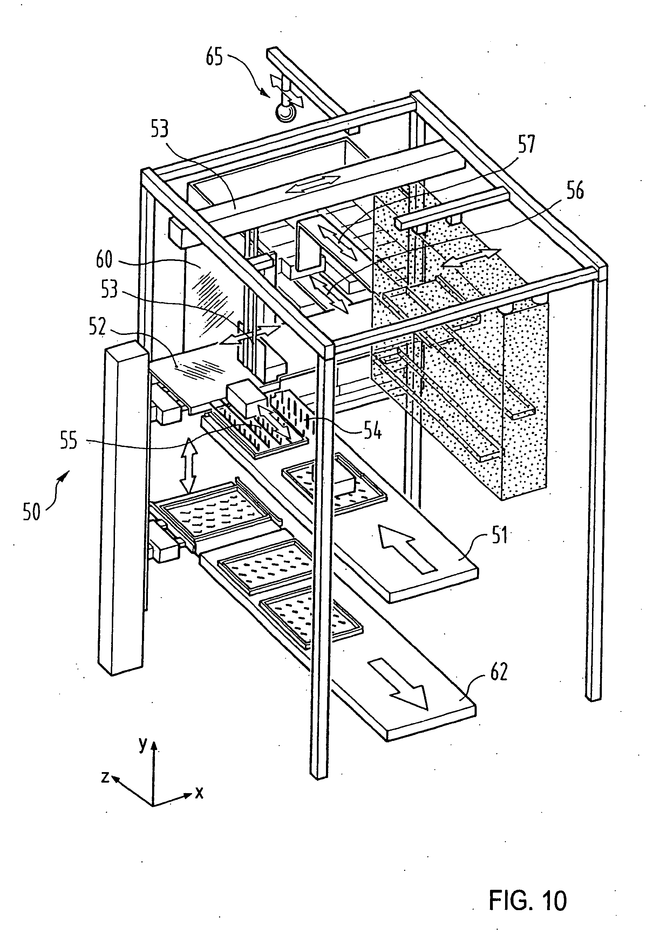

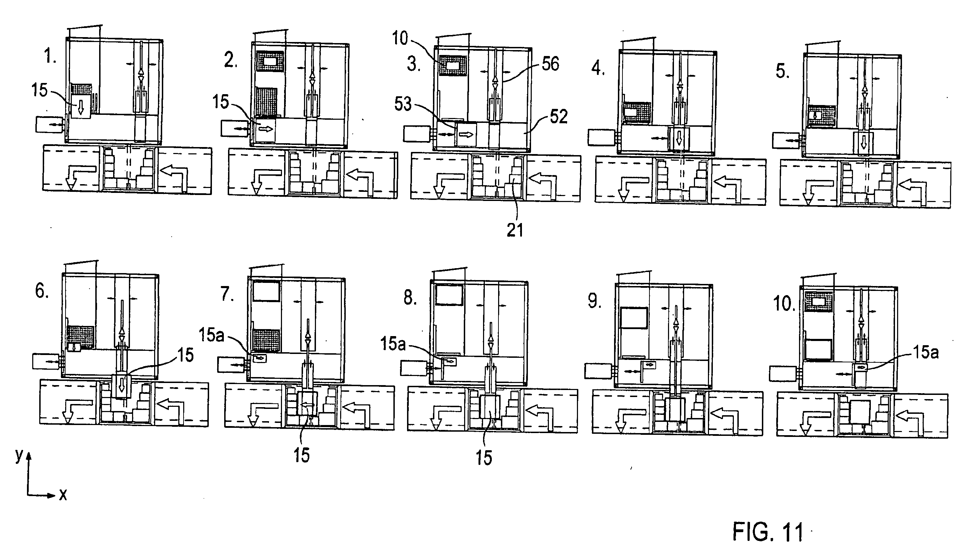

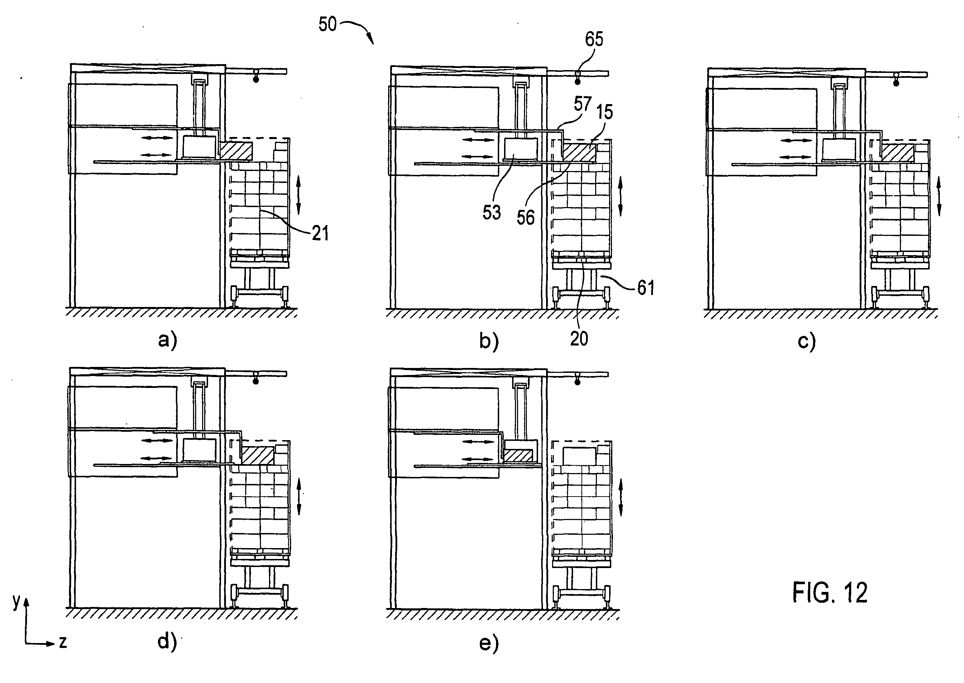

Ein Ausführungsbeispiel der erfindungsgemäßen Ladungsträger-Beladungsvorrichtung 50 ist in Fig. 10 perspektivisch dargestellt. Die Funktionsweise dieses Ausführungsbeispiels wird weiterhin aufgrund der in den Fig. 11 und 12 gezeigten Ablaufdiagramme deutlich.

Die Tablare 10 mit jeweils darauf liegender Packeinheit 15 werden über einen Tablarförderer 51 der Beladungsvorrichtung 50 zugeführt. Am Ende des Tablarförderers 51 ergreifen Hubstifte 54 einer Hubeinrichtung die Packeinheit 15 durch die Öffnungen 11 im Tablar von unten und heben diese so aus dem Tablar 10 heraus. Daraufhin ergreift ein Rechen 55 die Packeinheit 15 und schiebt diese auf eine horizontale Ladeplatte 52. Die Hubstifte können dann wieder unter den Tablarförderer 51 abgesenkt werden, so daß das entleerte Tablar 10 über einen Tablar-Rückförderer 62 ins Tablarlager zurückbefördert werden kann. Die auf der Ladeplatte 52 liegende Packeinheit 15 wird mittels einer Verschiebeeinrichtung (Pusher) 53 in x-Richtung, d.h. in Richtung der Längsseite des Ladungsträgers 20 bis zu der vorgesehenen x-Position der Packeinheit in der Beladungskonfiguration des Ladestapels 21 bewegt. Dann wird die Packeinheit 15 mittels eines Abstreifers 57 auf eine in z-Richtung (Tiefenrichtung des Ladestapels) vorragende Beladezunge 56 geschoben und mittels dieser in z-Richtung bis zu der vorgesehenen z-Position der räumlichen Beladungskonfiguration des Ladestapels bewegt. Dann wird die Beladezunge 56 zurückgefahren, während der Abstreifer 57 zunächst in seiner Position verharrt, wodurch die Packeinheit 15 an der für diese vorgesehenen Position auf dem Ladestapel abgelegt wird. Anschließend werden Beladezunge und Abstreifer wieder zurückgefahren zur Aufnahme der nächsten Packeinheit. Um die beschriebene Beladungsaufgabe zu erfüllen, müssen Beladezunge und Abstreifer simultantan in x-Richtung und voneinander unabhängig in z-Richtung bewegbar sein.

Bei den Auftrags-Ladungsträgern handelt es sich beispielsweise um handelsübliche Paletten wie etwa sogenannte Euro-Paletten. Die Erfindung ist jedoch auch auf seitlich umschlossene Ladungsträger wie etwa Kisten, Behälter oder Gitterboxen anwendbar. Zur Beladung solcher umschlossener Ladungsträger mit der Beladevorrichtung ist eine (in den Figuren nicht dargestellte) Ladungsträger-Kippeinrichtung vorgesehen, die einen umschlossenen Ladungsträger um 90 Grad nach vorne kippt, so daß er quasi von oben her zugänglich ist und beladen werden kann. Mit Hilfe der oben erwähnten Packeinheit-Kippeinrichtung 85 können die Packeinheiten vor der Beladung in die entsprechende gekippte Position gebracht werden.

Der Beladevorgang wird im folgenden noch einmal im Detail unter Bezugnahme auf die Sequenzdarstellung in Aufsicht von Fig. 11 erläutert. In Darstellung 1. ergreifen die Hubstifte 54 die auf dem Tablar 10 liegende Packeinheit 15, die dann durch den Rechen 15 auf die Ladeplatte 52 befördert wird. Dann wird die Packeinheit 15 durch die Verschiebeeinrichtung 53 in x-Richtung zu der Verladeposition verschoben (Darstellung 2. und 3.). Ist die richtige x-Position erreicht (Darstellung 4.), wird die Packeinheit mit dem Abstreifer 57 auf die Ladezunge 56 geschoben (Darstellung 5.) und dann auf der Beladezunge 56 liegend in z-Richtung bis zu der vorgesehenen Position geschoben (Darstellung 6. und 7.) und anschließend durch eine kleine Bewegung der Ladezunge in (in diesem Fall) negative x-Richtung an eine bereits in der Ladeebene vorhandene Packeinheit angedrückt (Darstellung 7.). Anschließend zieht sich die Beladezunge zurück, während der Abstreifer 57 zunächst in seiner Position bleibt (Darstellung 8.), wodurch die Packeinheit 15 an der für diese vorgesehenen Position abgelegt wird. Schließlich ziehen sich Ladezunge und Abstreifer beide zurück, so daß die nächste Packeinheit 15a positioniert werden kann.

Wie aus Darstellung 6. hervorgeht, wird in dem Moment, wenn die erste Packeinheit 15 gerade mit der Beladezunge auf den Ladestapel geladen wird, die nächste Packeinheit mit dem Rechen 55 schon auf die Ladeplatte 52 geschoben, dann in Darstellung 7., 8. und 9. mit der Verschiebeeinrichtung 9 in die richtige Position in x-Richtung verschoben und in Darstellung 10. durch die Abstreifer 57 ergriffen.

Die einzelnen Tablare und Packeinheiten folgen mit einem solchen Abstand hintereinander, daß die einzelnen Bewegungen jeweils entkoppelt und unabhängig voneinander ausgeführt werden können.

Die Sequenz von Fig. 12 zeigt die Funktionsweise der erfindungsgemäßen Beladevorrichtung in Seitenansicht. Dabei ist die Paletten-Hubeinrichtung 61 zu erwähnen, die die Positionierung einer Packeinheit im Ladestapel in y-Richtung durch Anheben bzw. Absenken des Ladungsträgers durchführt. Gut zu erkennen ist in Fig. 12 ebenfalls, wie in Fig. 12a), 12b), 12c) die Packeinheit 15 ("Carton") durch Beladezunge 56 und Abstreifer 57 an die richtige Tiefenposition auf dem Beladungsstapel transportiert wird. In dem in Fig. 12d) gezeigten Verfahrensschritt ist die Beladezunge 56 bereits zurückgezogen und die Packeinheit wird nur noch durch den Abstreifer 57 in Position gehalten, der sich in Fig. 12e) ebenfalls zurückzieht, um die nächste Packeinheit ergreifen zu können.

Ebenfalls vorgesehen ist bei dem gezeigten Ausführungsbeispiel eine Abtasteinrichtung 65, beispielsweise in Form eines Laser-Abtasters zur Erfassung der aktuellen Höhe des Beladestapels und zur Überprüfung, ob der Beladungsvorgang den berechneten Vorgaben entspricht. Vorzugsweise ist die Abtasteinrichtung 65 beweglich angeordnet.

Den Fig. 10 bis 12 außerdem entnehmbar ist die Ladehilfe 60, die den sich bildenden Ladestapel 21 von drei Seiten umgibt und so als Abstützfläche für eine Schiebebewegung der Packeinheiten in Horizontalrichtung dienen kann.

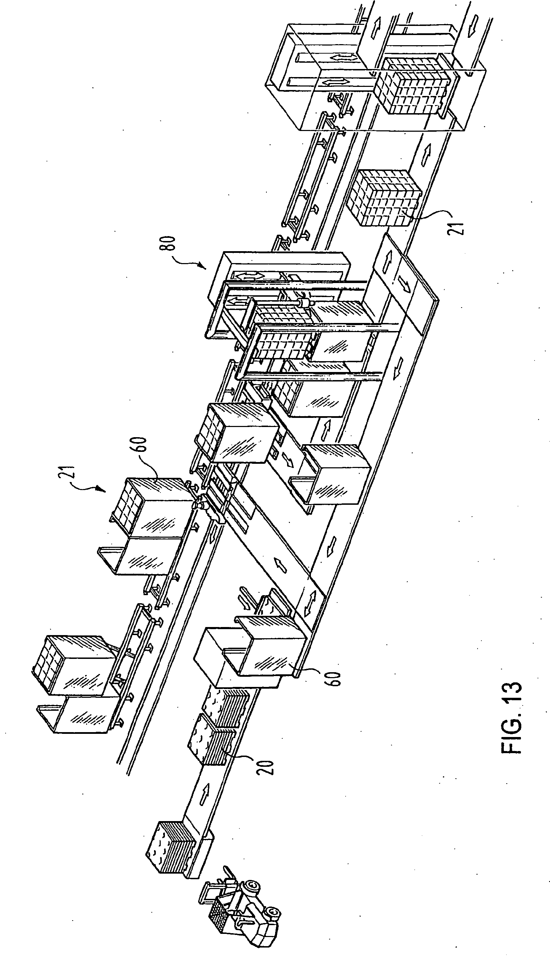

Sobald ein Ladungsträger mit einem Ladestapel 21 vollständig beladen ist, tauscht eine Ladungsträger-Wechseleinrichtung 58 den gefüllten Ladungsträger durch einen neuen, leeren Ladungsträger aus (Fig. 13). Der gefüllte Ladungsträger gelangt, wie ebenfalls in Fig. 13 gezeigt ist, zu einer Folienwickelmaschine 80, in der der beladene Ladungsträger 20 aus der Ladehilfe 60 herausgehoben wird und gleichzeitig mit einer Folie zur Stabilisierung des Ladestapels umwickelt wird. Der umwickelte Ladestapel gelangt dann über einen Aufzug oder dergleichen zu einer Laderampe für die LKW-Verladung, während die leere Ladehilfe mit einer Palette versehen wird und dann wieder der Beladevorrichtung zugeführt wird.

Die Erfindung ermöglicht so eine automatisierte Beladung von Ladungsträgern wie Paletten mit in verschiedenen Packeinheiten zugeführten Artikeln, wobei eine materialunabhängige und schonende Beladung sichergestellt werden kann. Außerdem ist es möglich, stabile Ladestapel mit guter Volumenausnutzung zu bilden und gleichzeitig eine hohe Kommissionierleistung wirtschaftlich darzustellen.

## Patentansprüche

1. Vorrichtung zum Beladen eines Ladungsträgers (20) mit einen Ladestapel (21) bildenden Packeinheiten (15), aufweisend:
Handhabungs- und Unterstützungsmittel (52-57), welche eine zu verladende Packeinheit (15) während des gesamten Beladevorgangs von einer Zuführeinrichtung (51) auf den Ladestapel von unten her unterstützen und
welche Handhabungs- und Unterstützungsmittel (52-57) ausgebildet sind, die Packeinheit an einer beliebigen wählbaren räumlichen Postition auf dem Ladestapel (21) abzulegen, **dadurch gekennzeichnet, dass** die Zutuhreinrichtung (51) die Packeinheiten (15) jeweils einzeln auf mit Öffnungen (11) versehenen Tablaren (10) zuführt, und die Handhabungs- und Unterstützungsmittel Mittel zum Anheben einer Packeinheit (15) von dem Tablar (10) aufweisen.

2. Vorrichtung nach Anspruch 1, aufweisend eine Hubeinrichtung (61) zum Anheben und Absenken des Ladungsträgers (20).

3. Vorrichtung nach Anspruch 1 oder 2, wobei eine Ladehilfe (60) zum Beladen des Ladungsträgers vorgesehen ist.

4. Vorrichtung nach Anspruch 3, wobei die Ladehilfe (60) wenigstens eine, vorzugsweise drei Seiten des Ladestapels (21) umschließt.

5. Vorrichtung nach einem der Ansprüche 1 bis 4, aufweisend eine Ladungsträger-Kippeinrichtung zum Kippen von Ladungsträgern zur Beladung seitlich umschlossener Ladungsträger.

6. Vorrichtung nach Anspruch 3, 4 oder 5, ferner aufweisend eine Wickeleinrichtung (80) zum Umwickeln des vollständig gestapelten Ladestapels (21) mit Sicherungsmitteln zur Stabilisierung des Ladestapels, während gleichzeitig zur Entfernung der Ladehilfe (60) entweder der Ladungsträger (20) gegenüber der Ladehilfe (60) angehoben oder die Ladehilfe (60) gegenüber dem Ladungsträger (20) abgesenkt wird.

7. Vorrichtung nach einem der Ansprüche 1 bis 6, wobei die Handhabungs- und Unterstützungsmittel eine ortsfeste Ladeplatte (52) und eine Verschiebeeinrichtung (53) zum Verschieben einer Packeinheit (15) auf der Ladeplatte (52) in einer Richtung (x-Richtung) horizontal längs der Breitseite des Ladungsträgers (20) aufweisen.

8. Vorrichtung nach Anspruch 1, wobei die Mittel zum Anheben einer Packeinheit (20) von dem Tablar (10) Hubstifte (54) zum Durchgriff durch die Tablar-Öffnungen (11) umfassen.

9. Vorrichtung nach Anspruch 8, aufweisend einen verschiebbaren Rechen (55) zur Zuführung einer durch die Hubstifte (54) angehobenen Packeinheit (15) auf die Ladeplatte (52).

10. Vorrichtung nach einem der Ansprüche 1 bis 9, aufweisend eine Einrichtung zum Abtransport der entleerten Tablare (10).

11. Vorrichtung nach Anspruch 7 oder einen auf diesen rückbezogenen Anspruch, wobei die Handhabungs- und Unterstützungsmittel eine Beladezunge (56) zum Ergreifen einer Packeinheit (15) auf der Ladeplatte (52) und zum Verfahren der Packeinheit in Richtung der Ladetiefe des Ladeträgers (z-Richtung) aufweisen.

12. Vorrichtung nach Anspruch 11, wobei die Handhabungs- und Unterstützungsmittel ferner einen oberhalb der Beladezunge (56) angeordneten Abstreifer (57) aufweisen, der unabhängig von der Beladezunge in z-Richtung verfahrbar ist, zum Zurückhalten der Packeinheit an der gewünschten Position auf dem Ladestapel (21).

13. Vorrichtung nach Anspruch 12, wobei Beladezunge (56) und Abstreifer (57) simultan in x-Richtung verfahrbar ausgebildet sind.

14. Vorrichtung nach einem der Ansprüche 1 bis 13, aufweisend eine verfahrbare Abtasteinrichtung (56) zur Erfassung der momentanen Höhe des Ladestapels (21).

15. Vorrichtung nach einem der Ansprüche 1 bis 14, aufweisend eine Ladungsträger-Wecheleinrichtung (58) zum Austausch eines beladenen Ladungsträgers durch einen unbeladenen Ladungsträger.

16. Vorrichtung nach einem der Ansprüche 1 bis 15, aufweisend eine Drehvorrichtung (48) zum Drehen zugeführter Tablare (10) um Vielfache von 90°.

17. Vorrichtung nach einem der Ansprüche 1 bis 16, aufweisend eine Tablar-Rütteleinrichtung (70) zur definierten Positionierung einer Packeinheit (15) auf dem Tablar (10).

18. Vorrichtung nach einem der Ansprüche 1 bis 17, aufweisend eine Packeinheit-Kippeinrichtung (85) zum Kippen einer Packeinheit (15) und zum Ablegen der gekippten Packeinheit auf dem Tablar (10).

19. Vorrichtung nach einem der Ansprüche 1 bis 18, aufweisend eine Sortiereinrichtung (45) zum Sortieren der der Beladevorrichtung (50) zugeführten Packeinheiten.

20. Verfahren zum automatisierten Beladen eines Ladungsträgers (20) mit einen Ladestapel (21) bildenden Packeinheiten (15), aufweisend die Schritte:
- Erfassung eines Kommissionsauftrags, der mehrere Packeinheiten umfaßt,
- Bestimmung einer dreidimensionalen Beladungskonfiguration der Packeinheiten (15) in dem Ladestapel (21),
- Ermittlung einer diese Beladungskonfiguration ermöglichenden Beladungssequenz (Beladungsreihenfolge), und
- aufeinanderfolgende, automatisierte Beförderung der Packeinheiten (15) auf den Ladungsträger (20) in einer durch die ermittelte Beladungssequenz bestimmten Beladereihenfolge an die durch die Beladungskonfiguration bestimmte Position im Ladestapel (21), **dadurch gekennzeichnet, dass** die Packeinheiten (15) jeweils einzeln auf mit Öffnungen versehenen Tablaren (10) liegend zur Verladung auf den Ladungsträger (20) zugeführt und von dem jeweiligen Tablar (10) angehoben werden.

21. Verfahren nach Anspruch 20, wobei die Packeinheiten (15) während des Beladungsvorgangs stets auf einer Unterstützungseinrichtung (52-57) aufliegen,

22. Verfahren nach Anspruch 20 oder 21, wobei die Tablare (10) Öffnungen (11) zum Durchgriff von Hubstiften (54) zum Anheben einer Packeinheit (15) von dem Tablar (10) aufweisen.

23. Verfahren nach einem der Ansprüche 20 bis 22, umfassend die Verwendung einer Ladehilfe (60), die den sich auf dem Ladungsträger (20) bildenden Ladestapel (21) von mindestens einer, vorzugsweise von drei Seiten umschließt.

24. Verfahren nach Anspruch 23, umfassend die gleichzeitige Sicherung des Ladestapels durch Sicherungsmittel, vorzugsweise eine Folie, während des Entfernens der Ladehilfe (60).

25. Verfahren nach einem der Ansprüche 20 bis 24, umfassend den Schritt des Kippens eines seitlich umschlossenen Ladungsträgers zur Beladung mit den Packeinheiten.

26. Verfahren nach einem der Ansprüche 20 bis 25, umfassend den Schritt des Kippens von Packeinheiten vor der Beladung auf den Ladungsträger.

27. Verfahren nach einem der Ansprüche 20 bis 26, wobei die dreidimensionale Beladungskonfiguration bezüglich der Ladestabilität des Ladestapels optimiert wird.

28. Verfahren nach einem der Ansprüche 20 bis 27, wobei die dreidimensionale Beladungskonfiguration des Ladestapels bezüglich der Volumenausnutzung optimiert wird.

29. Verfahren nach einem der Ansprüche 20 bis 28, wobei die dreidimensionale Beladungskonfiguration des Ladestapels (21) bezüglich der möglichen Höhe des Ladestapels optimiert wird.

30. Verfahren nach einem der Ansprüche 20 bis 29, wobei die dreidimensionale Beladungskonfiguration in einzelne Ladeebenen mit jeweils möglichst gleich hohen Packeinheiten (15) aufgeteilt ist.

31. Verfahren nach Anspruch 30, wobei die Beladungssequenz so bestimmt wird, daß die Packeinheiten (15) eine Ebene stets von hinten nach vorne und von links (rechts) nach rechts (links) aufgefüllt werden.

32. Verfahren nach einem der Ansprüche 20 bis 31, umfassend den Schritt des Sortierens der Packeinheiten vor der Beladung auf den Ladungsträger.

## Claims

1. Apparatus for loading a load carrier (20) with packing units (15) forming a load stack (21), said device having:
handling and supporting means (52-57) by which a packing unit (15) to be loaded is supported from below throughout the loading operation by a feed device (51) onto the load stack, and which handling and supporting means (52-57) are designed to deposit the packing unit at any selectable spatial position on the load stack (21), **characterised in that** the feed device (51) feeds in the packing units (15), individually in each case, on trays (10) provided with openings (11), and the handling and supporting means have means for lifting a packing unit (15) from the tray (10).

2. Apparatus according to claim 1, having a lifting device (61) for lifting and lowering the load carrier (20).

3. Apparatus according to claim 1 or 2, wherein a loading aid (60) is provided for loading the load carrier.

4. Apparatus according to claim 3, wherein the loading aid (60) encloses at least one side, and preferably three sides, of the load stack (21).

5. Apparatus according to one of claims 1 to 4, having a load carrier-tilting device for tilting load carriers in order to load laterally enclosed load carriers.

6. Apparatus according to claim 3, 4 or 5, also having a wrapping device (80) for wrapping protective means around the fully stacked load stack (21) in order to stabilise the load stack, while at the same time, for the purpose of removing the loading aid (60), either the load carrier (20) is lifted relative to the loading aid (60) or the loading aid (60) is lowered relative to the load carrier (20).

7. Apparatus according to one of claims 1 to 6, wherein the handling and supporting means have a stationary loading plate (52) and a displacing device (53) for displacing a packing unit (15) on the loading plate (52) in a direction (the x direction) horizontally along the broad side of the load carrier (20).

8. Apparatus according to claim 1, wherein the means for lifting a packing unit (15) from the tray (10) comprise lifting pins (54) for engagement through the tray openings (11).

9. Apparatus according to claim 8, having a displaceable rake (55) for feeding a packing unit (15), which has been lifted by the lifting pins (54), onto the loading plate (52).

10. Apparatus according to one of claims 1 to 9, having a device for transporting away the empty trays (10).

11. Apparatus according to claim 7, or a claim which refers back to claim 7, wherein the handling and supporting means have a loading tongue (56) for grasping a packing unit (15) on the loading plate (52) and for moving the packing unit in the direction of the load depth of the load carrier (the z direction).

12. Apparatus according to claim 11, wherein the handling and supporting means also have a scraper (57) which is disposed above the loading tongue (56) and is movable in the z direction, independently of the loading tongue, for retaining the packing unit at the desired position on the load stack (21).

13. Apparatus according to claim 12, wherein the loading tongue (56) and scraper (57) are designed so as to be movable simultaneously in the x direction.

14. Apparatus according to one of claims 1 to 13, having a movable scanning device (56) for acquiring the instantaneous height of the load stack (21).

15. Apparatus according to one of claims 1 to 14, having a load carrier-changing device (58) for exchanging a loaded load carrier for an unloaded load carrier.

16. Apparatus according to one of claims 1 to 15, having a rotating apparatus (48) for rotating trays (10) that have been fed in, by multiples of 90°.

17. Apparatus according to one of claims 1 to 16, having a tray-vibrating device (70) for the defined positioning of a packing unit (15) on the tray (10).

18. Apparatus according to one of claims 1 to 17, having a packing unit-tilting device (85) for tilting a packing unit (15) and for depositing the tilted packing unit on the tray (10).

19. Apparatus according to one of claims 1 to 18, having a sorting device (45) for sorting the packing units fed to the loading device (50).

20. Method for the automated loading of a load carrier (20) with packing units (15) forming a load stack (21), said method comprising the following steps:
- acquisition of a pick order which comprises a plurality of packing units;
- determination of a three-dimensional loading configuration of the packing units (15) in the load stack (21);
- identification of a loading sequence (loading order) that makes the said loading configuration possible; and
- successive, automated conveyance of the packing units (15) onto the load carrier (20) in a loading order determined by the loading sequence identified, to that position in the load stack (21) which is determined by the loading configuration;
**characterised in that** the packing units (15) are fed in, lying individually in each case on trays (10) provided with openings, for loading onto the load carrier (20), and are lifted from the tray (10) in question.

21. Method according to claim 20, wherein the packing units (15) lie on a supporting device (52-57) throughout the loading operation.

22. Method according to claim 20 or 21, wherein the trays (10) have openings (11) through which lifting pins (54) engage in order to lift a packing unit (15) from the tray (10).

23. Method according to one of claims 20 to 22, comprising the use of a loading aid (60) which encloses the load stack (21), which is being formed on the load carrier (20), from at least one side, and preferably from three sides.

24. Method according to claim 23, comprising the simultaneous safeguarding of the load stack by protective means, preferably a film, during the removal of the loading aid (60).

25. Method according to one of claims 20 to 24, comprising the step of tilting a laterally enclosed load carrier for loading with the packing units.

26. Method according to one of claims 20 to 25, comprising the step of tilting packing units prior to loading onto the load carrier.

27. Method according to one of claims 20 to 26, wherein the three-dimensional loading configuration is optimised with regard to the loading stability of the load stack.

28. Method according to one of claims 20 to 27, wherein the three-dimensional loading configuration of the load stack is optimised with regard to utilisation of the volume.

29. Method according to one of claims 20 to 28, wherein the three-dimensional loading configuration of the load stack (21) is optimised with regard to the possible height of said load stack.

30. Method according to one of claims 20 to 29, wherein the three-dimensional loading configuration is split into individual loading planes with packing units (15), each of as identical a height as possible.

31. Method according to claim 30, wherein the loading sequence is determined in such a way that the packing units (15) of a plane are always loaded from the back towards the front and from left (right) to right (left).

32. Method according to one of claims 20 to 31, comprising the step of sorting the packing units prior to loading onto the load carrier.

## Revendications

1. Dispositif de chargement d'un porte-charge (20) avec des unités de conditionnement (15) formant une pile de chargement (21), présentant :
des moyens de manipulation et de support (52-57, 61) qui soutiennent par le bas une unité de conditionnement (50) à charger, pendant tout le processus de chargement d'une installation d'alimentation (51) sur la pile de chargement, et sont configurés pour déposer l'unité de conditionnement dans une position spatiale sélectionnable quelconque sur la pile de chargement (21),
**caractérisé en ce que** l'installation d'amenée (51) amène les unités de conditionnement (15) à chaque fois individuellement sur des rayons (10) dotés d'ouvertures (11), et les moyens de manipulation et de support présentent des moyens pour soulever une unité de conditionnement (15) depuis le rayon (10).

2. Dispositif selon la revendication 1, présentant une installation de levage (61) pour soulever et abaisser le porte-charge (20).

3. Dispositif selon la revendication 1 ou 2, une aide au chargement (60) étant prévue pour le chargement du porte-charge.

4. Dispositif selon la revendication 3, où l'aide au chargement (60) entoure au moins un côté, de préférence trois côtés, de la pile de chargement (21).

5. Dispositif selon l'une quelconque des revendications 1 à 4, comprenant une installation de basculement de porte-charge pour faire basculer les porte-charge en vue de charger les porte-charge entourés sur les côtés.

6. Dispositif selon la revendication 3, 4 ou 5, présentant en outre un enrouleur (80) pour enrouler la pile de chargement (21) entièrement empilée avec des moyens de fixation pour stabiliser la pile de chargement, pendant que, simultanément pour retirer l'aide au chargement (60), soit le porte-charge (20) est soulevé par rapport à l'aide au chargement (60), soit l'aide au chargement (60) est abaissée par rapport au porte-charge (20).

7. Dispositif selon l'une quelconque des revendications 1 à 6, **caractérisé en ce que** les moyens de manipulation et de support présentent une plaque de chargement stationnaire (52) et un dispositif coulissant (53) pour faire coulisser horizontalement une unité de conditionnement (15) sur la plaque de chargement (52) dans une direction (direction X) le long du côté large du porte-charge (20).

8. Dispositif selon la revendication 1, les moyens de levage d'une unité de conditionnement (15) depuis le rayon (10) comprenant des tiges de levage (54) pour le passage à travers les orifices (11) de rayons.

9. Dispositif selon la revendication 8, présentant un râteau coulissant (55) pour amener une unité de conditionnement (15) soulevée par les tiges de levage (54) sur la plaque de chargement (52).

10. Dispositif selon l'une quelconque des revendications 1 à 9, présentant une installation d'évacuation des rayons vidés (10).

11. Dispositif selon la revendication 7 ou une revendication qui y renvoie, où les moyens de manipulation et de support comprennent une lame de chargement (56) pour saisir une unité de conditionnement (15) sur la plaque de chargement (52) et pour déplacer l'unité de conditionnement en direction de la profondeur de chargement du porte-charge (direction Z).

12. Dispositif selon la revendication 11, où les moyens de manipulation et de support comprennent encore une plaque de garde (57) disposée au-dessus de la lame de chargement (56) qui peut être déplacée dans la direction Z indépendamment de la lame de chargement, pour retenir l'unité de conditionnement dans la position souhaitée sur la pile de chargement.

13. Dispositif selon la revendication 12, la lame de chargement (56) et la plaque de garde (57) étant configurées de manière à pouvoir être déplacées simultanément dans la direction x.

14. Dispositif selon l'une quelconque des revendications 1 à 13, présentant une installation d'exploration (56) mobile pour détecter la hauteur momentanée de la pile de chargement (21).

15. Dispositif selon l'une quelconque des revendications 1 à 14, présentant une installation de remplacement de porte-charge (58) pour échanger un porte-charge chargé par un porte-charge déchargé.

16. Dispositif selon l'une quelconque des revendications 1 à 15, présentant un dispositif de rotation (48) pour faire pivoter à plusieurs reprises de 90° des rayons (10) amenés.

17. Dispositif selon l'une quelconque des revendications 1 à 16, présentant une installation vibrante (70) de rayons pour le positionnement défini d'une unité de conditionnement (15) sur le rayon (10).

18. Dispositif selon l'une quelconque des revendications 1 à 17, présentant une installation de basculement (85) d'unité de conditionnement pour faire basculer une unité de conditionnement (15) et pour déposer l'unité de conditionnement basculée sur le rayon (10).

19. Dispositif selon l'une quelconque des revendications 1 à 18, présentant une installation de tri (45) pour trier les unités de conditionnement amenées au dispositif de chargement (50).

20. Procédé de chargement automatique d'un porte-charge (20) avec des unités de conditionnement (15) formant une pile de chargement (21), présentant les étapes suivantes :
- enregistrement d'un bon de préparation d'une commande comprenant plusieurs unités de conditionnement,
- détermination d'une configuration de chargement tridimensionnelle des unités de conditionnement (15) dans la pile de chargement (21),
- établissement d'une séquence de chargement (chargements successifs) autorisant cette configuration de chargement, et
- acheminement successif automatisé des unités de conditionnement (15) sur le porte-charge (20) dans une suite de chargement déterminée par la séquence de chargement dans la position déterminée par la configuration de chargement dans la pile de chargement (21), **caractérisé en ce que** les unités de conditionnement (15) sont amenées respectivement individuellement sur des rayons (10) en position posée pour le chargement sur le porte-charge (20) et soulevées par le rayon (10) respectif.

21. Procédé selon la revendication 20, les unités de conditionnement (15) reposant toujours pendant le procédé de chargement sur une installation de support (52 - 57).

22. Procédé selon la revendication 20 ou 21, les rayons (10) présentant des ouvertures (11) pour le passage de tiges de levage (54) pour relever une unité de conditionnement (15) du rayon (10).

23. Procédé selon l'une quelconque des revendications 20 à 22, comprenant l'utilisation d'une aide au chargement (60) qui entoure la pile de chargement (21) se formant sur le porte-charge (20) par au moins un côté, de préférence par trois côtés.

24. Procédé selon la revendication 23, comprenant la fixation simultanée de la pile de chargement par des moyens de fixation, de préférence par une feuille, pendant le retrait de l'aide au chargement (60).

25. Procédé selon l'une quelconque des revendications 20 à 24, comprenant l'étape de basculement d'un porte-charge entouré latéralement pour le chargement avec les unités de conditionnement.

26. Procédé selon l'une quelconque des revendications 20 à 25, comprenant l'étape de basculement des unités de conditionnement avant le chargement sur le porte-charge.

27. Procédé selon l'une quelconque des revendications 20 à 26, la configuration de chargement tridimensionnelle étant optimisée du point de vue de la stabilité de chargement de la pile de chargement.

28. Procédé selon l'une quelconque des revendications 20 à 27, la configuration de chargement tridimensionnelle de la pile de chargement (21) étant optimisée du point de vue de l'exploitation du volume.

29. Procédé selon l'une quelconque des revendications 20 à 28, la configuration de chargement tridimensionnelle de la pile de chargement (21) étant optimisée du point de vue de la hauteur possible de la pile de chargement.

30. Procédé selon l'une quelconque des revendications 20 à 29, la configuration de chargement tridimensionnelle étant répartie en différents plans de chargement avec des unités de conditionnement (15) ayant à chaque fois autant que possible la même hauteur.

31. Procédé selon la revendication 30, la séquence de chargement étant déterminée de telle sorte que les unités de conditionnement (15) d'un plan sont toujours remplies d'arrière en avant et de gauche (droite) à droite (gauche).

32. Procédé selon l'une quelconque des revendications 20 à 31, comprenant l'étape de tri des unités de conditionnement avant le chargement sur le porte-charge.
